(19) Europäisches Patentamt
European Patent Office
Office européen des brevets

(11) **EP 4 600 827 A1**

(12) # EUROPEAN PATENT APPLICATION
published in accordance with Art. 153(4) EPC

(43) Date of publication:
**13.08.2025  Bulletin 2025/33**

(21) Application number: **24869816.9**

(22) Date of filing: **03.06.2024**

(51) International Patent Classification (IPC):
***G06F 11/10*** *(2006.01)*

(86) International application number:
**PCT/CN2024/097075**

(87) International publication number:
**WO 2025/066254 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.09.2023  CN 202311247611**

(71) Applicant: **Hygon Information Technology Co., Ltd.**
**Tianjin 300392 (CN)**

(72) Inventors:
• **ZHOU, Peng**
  **Tianjin 300392 (CN)**
• **WANG, Yuxuan**
  **Tianjin 300392 (CN)**

(74) Representative: **Maiwald GmbH**
**Elisenhof**
**Elisenstraße 3**
**80335 München (DE)**

(54) **DATA PROCESSING METHOD, MEMORY CONTROLLER AND STORAGE SYSTEM**

(57)     Provided in at least one embodiment of the present disclosure are a data processing method, a memory controller and a storage system. The data processing method comprises: reading four pieces of burst data from a single memory channel; organizing the four pieces of burst data into a group of error correcting code words, the group of error correcting code words comprising k read-back data symbols and m read-back check symbols, and the total bit width of the m read-back check symbols being eight times the bit width of one symbol; and, on the basis of the group of error correcting code words, performing a decoding operation so as to obtain symbols of which errors have been corrected. By reading the four pieces of burst data from the single memory channel and executing one ECC operation, the data processing method can simultaneously correct errors of, for example, two or more symbols.

Fig. 1

## Description

The application claims priority of the Chinese Patent Application No. 202311247611.1, filed on September 25, 2023, the disclosure of which is incorporated herein by reference in its entirety as part of the present application.

## TECHNICAL FIELD

Embodiments of the present disclosure involve a method for processing data, a memory controller, a storage system, an electronic apparatus and a storage medium.

## BACKGROUND

Data is susceptible to interference of factors such as environment during transmission, communication and storage, leading to a data error. For example, a double data rate (DDR) memory (e.g., a DDR SDRAM or a DDR memory) is inevitably interfered by environmental factors such as electromagnetism during operation, leading to a memory error. For users requiring high stability, the memory error may cause a fatal problem. For example, for a server which has relatively a high requirement for DDR data reliability, the DDR memory error correction technology may improve stability and error correction capability of a server memory, for example, a memory stick that supports error correcting code (ECC) may improve stability and error correction capability of the server memory.

For some DDR memories, when a correctable error (CE) occurs, the memory DIMM is not necessarily replaced once an error occurs. However, once an uncorrectable error (UE) occurs, if currently there are 2 memory devices simultaneously having errors, an uncorrectable error is reported. In this case, data is generally lost and cannot be recovered. Data loss affects corresponding operations executed by a processor or other computing unit, resulting in failure of related functions or applications to run normally, and even causing downtime.

## SUMMARY

A first aspect of the present disclosure provides a method for processing data, which includes: reading four sets of burst data from a single storage channel; organizing the four sets of burst data into a group of error correction codewords, where the group of error correction codewords includes k read-back data symbols and m read-back check symbols, and a total bit width of the m read-back check symbols is eight times a bit width of one symbol; and performing a decoding operation based on the group of error correction codewords, to obtain error corrected symbols.

A second aspect of the present disclosure provides a memory controller, which includes: a reading unit, configured to read four sets of burst data from a single storage channel; and organize the four sets of burst data into a group of error correction codewords, where the group of error correction codewords includes k read-back data symbols and m read-back check symbols, and a total bit width of the m read-back check symbols is eight times a bit width of one symbol; and a decoding unit, configured to perform a decoding operation based on the group of error correction codewords, to obtain error corrected symbols.

A third aspect of the present disclosure provides a storage system, which includes: the memory controller as described above; and a storage unit.

A fourth aspect of the present disclosure provides an electronic apparatus, which includes: one or more processors; a memory, including one or more computer program modules; where the one or more computer program modules are stored in the memory and configured to be executed by the one or more processors to implement the method as described above.

A fifth aspect of the present disclosure provides a non-transitory readable storage medium, storing computer executable instructions, where the computer executable instructions, upon being executed by a processor, implement the method as described above.

## BRIEF DESCRIPTION OF DRAWINGS

To more clearly illustrate the embodiments of the present disclosure, the drawings required to be used for the embodiments are briefly described in the following. It is obvious that the described drawings are only some embodiments of the present disclosure, and therefore should not be regarded as limiting the scope.

Fig. 1 shows a flowchart of a method for processing data according to at least one embodiment of the present disclosure;

Fig. 2 shows a schematic diagram of a memory controller according to at least one embodiment of the present disclosure;

Fig. 3 shows a structural diagram of simultaneously correcting a plurality of memory device errors according to at least one embodiment of the present disclosure;

Fig. 4 shows a schematic diagram of a storage system according to at least one embodiment of the present disclosure;

Fig. 5 shows a schematic diagram of a memory subsystem according to at least one embodiment of the present disclosure;

Fig. 6 shows a schematic diagram of an electronic apparatus according to at least one embodiment of the present disclosure; and

Fig. 7 shows a schematic diagram of a non-transitory readable storage medium according to at least one embodiment of the present disclosure.

DETAILED DESCRIPTION

The embodiments of the disclosure are exemplified in the drawings, and reference will now be made in detail to specific the embodiments of the present disclosure. Although the present disclosure will be described in connection with specific embodiments, it should be understood that it is not intended to limit the present disclosure to the described embodiments. Rather, it is intended to cover changes, modifications, and equivalents included within the spirit and scope of the present disclosure as defined by the appended claims. It should be noted that the method operations described herein may be implemented by any functional block or functional arrangement, and that any functional block or functional arrangement may be implemented as a physical entity or a logical entity, or a combination of both.

In order to provide those skilled in the art with a better understanding of the present disclosure, it is described in further detail below in connection with the drawings and specific embodiments.

It should be noted that examples to be introduced next are only specific examples and are not intended to limit specific appearance, hardware, connection relationships, operations, numerical values, conditions, data, sequence, etc. that must be shown and described in the embodiments of the present disclosure. Those skilled in the art may construct more embodiments not mentioned in this specification by using the concepts of the present disclosure through reading this specification.

The terms used in the present disclosure are those commonly used terms in the field at present in consideration of the functionality of the present disclosure, but these terms may vary according to intentions, precedents, or new technologies in the field of those ordinarily skilled in the art. In addition, specific terms may be chosen by the applicant, and in such cases, detailed meanings thereof will be described in the detailed description of the present disclosure. Therefore, the terms used in the specification should not be understood as simple names, but rather based on the meaning of the terms and the overall description of the present disclosure.

A flowchart is used in the present disclosure to illustrate operations executed by the system according to the embodiments of the present disclosure. It should be understood that the preceding or following operations may not be executed precisely in order. On the contrary, various steps may be processed in reverse order or simultaneously as needed. Meanwhile, other operations may also be added to these processes, or a certain step or several steps may be removed from these processes.

Firstly, abbreviations and related terms involved in the present disclosure will be defined and illustrated.

Double-symbol correction (DSC): a technique that may correct two symbols at one time.

Double data rate (DDR): double data rate.

DDR SDRAM: double data rate synchronous dynamic random access memory, conventionally referred to as DDR.

Error check correction (ECC): a technique that may implement "error check and correction", which may improve stability and reliability of computer operation.

Reed-Solomon (RS) coding, also referred to as a Reed-Solomon code or an RS code, is forward error correction channel coding that is effective for polynomials generated through correcting oversampled data. The RS code is a special type of non-binary BCH code with strong error correction capability. With respect to an optional positive integer S, a corresponding q-ary BCH code with a code length of n=qS-1 may be constructed, where q is a power of a certain prime number. The q-ary BCH code with a code length of n=q-1 established when S=1, q>2 is referred to as the RS code. When $q=2^m(m>1)$, a binary RS code whose symbol is taken from F(2m) may be used to correct burst errors and it is the most commonly used RS code.

Multi device error correction (MDEC): error correction on multiple devices.

Single device data correction (SDDC): correction of data on one device.

Double device data correction (DDDC): correction of data on two devices.

Memory channel: abbreviated as channel, where each memory controller may have a plurality of memory channels; these memory channels are data transmission paths between a memory and a memory controller on a processor (e.g., a CPU); for example, commonly seen memory channels include memory channel 0 and memory channel 1.

Uncorrectable error (UE): an error that is uncorrectable.

Correctable Error (CE): an error that is correctable.

Data device: a storage device that stores data, also referred to as a data memory device in a DDR memory.

Error checking and correction device (ECC Device): a storage device that stores check bits, also referred to as a check memory device in the DDR memory.

Storage device: the data storage device and the check storage device are collectively referred to as storage devices. The storage device in the DDR memory is also referred to as a memory device, and may be used as a general term for the data memory device and the check memory device.

Symbol: also referred to as a code element, which is the smallest unit in ECC. Generally, for the devices of x4 and x8, the corresponding symbols can be 4-bit data and 8-bit data respectively.

ECC word: object data that executes an ECC operation, which is embodied in a form of "data bit + check information" in memory architecture that supports ECC, for example.

It may be understood that the terms defined above are only exemplary definitions in specific application scenarios for better understanding of the present disclosure. For example, the exemplary definition for a specific memory as described above may be extended to other types of memory or other storage.

With respect to a storage (e.g., a DDR memory), if there are two storage devices simultaneously having errors at present, the current system reports an uncorrectable error, that is, the error cannot be corrected, and is uncorrectable even after re-reading, so that data is lost, which even causes system downtime in a severe case. If hardware is used for recording previous information such as position of the correctable error and algorithm post-processing to achieve an objective of correcting two memory devices one by one, the problem of two memory devices simultaneously having errors may also be solved partially, which, however, requires a series of prerequisites and has low coverage.

An exemplary mainstream method for correcting 2 errors is DDDC, which mainly includes key points below:

- Lockstep needs to be opened;
- Algorithmically, ECC uses parity and cyclic redundancy check (CRC) codes;
- One algorithm operation may only correct one memory device;
- When a second memory device is to be corrected, firstly the previously error memory device needs to be alternatively written into a spare device, and then the second error memory device is found by using an algorithm.
- Two memory device errors may be corrected only in a time-sharing manner. If two memory devices simultaneously have errors, then the DDDC technology is helpless and the system reports an uncorrectable error.

The hardware structure used in the technology provided by at least one embodiment of the present disclosure does not require any prerequisite condition; when a plurality of data devices have random errors with each device having 1 bit to 2 bits of error, the hardware may complete multi device error correction without opening lockstep, or recording previous information, which greatly improves error correction capability. In addition, the hardware structure may improve reliability of the memory (e.g., the RAM), and further reduce risks of data loss and system downtime.

At least one embodiment of the present disclosure proposes a method for processing data, a memory controller, a storage system, an electronic apparatus, and a storage medium; for example, when at any moment, a plurality of storage devices have errors with each storage device having, for example, 1 bit to 2 bits of error, the hardware structure according to the at least one embodiment of the present disclosure may be used to correct errors of the plurality of storage devices simultaneously without software involvement or relying on historically recorded information, which greatly improves reliability of the memory and reduces risks of data loss and system downtime.

Hereinafter, the method for processing data, the memory controller, the storage system, the electronic apparatus and the storage medium according to the at least one embodiment of the present disclosure will be respectively introduced in detail with reference to the accompanying drawings.

Firstly, the method for processing data according to the embodiment of the present disclosure will be introduced below; and the method for processing data may be applied to the memory controller, the storage system, the electronic apparatus, and other suitable software or hardware, or a combination of hardware and software as further described below.

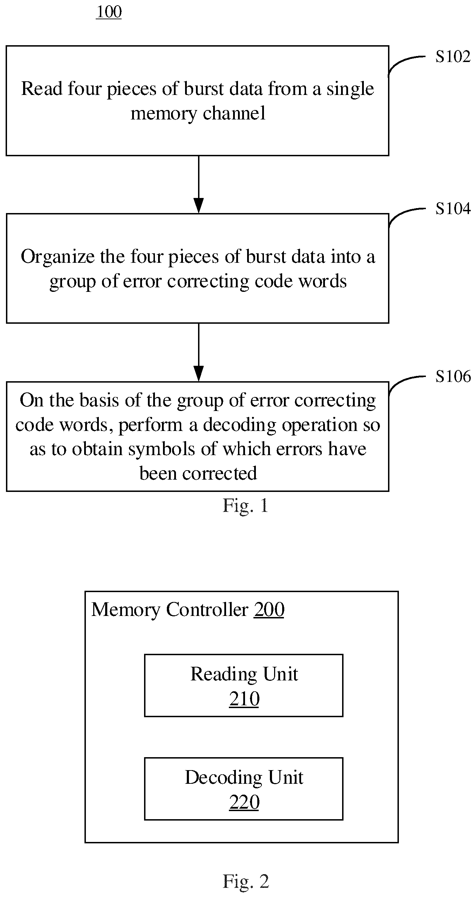

Fig. 1 shows a flowchart of a method for processing data 100 according to at least one embodiment of the present disclosure; and the method may include steps S102 to S106.

S102: reading four sets of burst data from a single storage channel.

In some embodiments, the four sets of burst data may correspond to coded data stored in the single storage channel; the coded data may be obtained by coding k data symbols written into the single storage channel; the coded data may include k data symbols and m check symbols, where a total bit width of the m check symbols is eight times the bit width of one symbol.

In some embodiments, a data bit and a check bit included in each set of burst data may be changed depending on arrangement of data storage devices and check storage devices corresponding to the storage channel. For example, in exemplary DDR4 or DDR5, the single storage channel may correspond to 8 x4 data memory devices and 2 x4 check memory devices (ECC memory devices), each set of burst data (Burst) including 8*4=32 bits of data bits and 2*4=8 bits of check bits. However, the present disclosure is not limited thereto. But it may be understood that usually a check symbol with a bit width twice that of one symbol is required to correct one symbol. For example, if one symbol has a bit width of 4 bits, usually a check symbol of 8 bits is required for error correction.

In some embodiments, a data symbol may be decoded and corrected (if necessary) during a decoding operation, to obtain data or instructions for executing computation, so as to implement a predetermined function. The check symbol may provide information during decoding and error correction (if necessary) to ensure that correct data is obtained.

An exemplary storage channel may be one of two memory channels (memory channel 0 (Ch0) and memory channel 1 (Ch1)) used in a memory controller such as DDR4 or DDR5, for example.

S104: organizing the four sets of burst data into a group of error correction codewords, where the group of error correction codewords includes k read-back data symbols and m read-back check symbols, and a total bit width of the m read-back check symbols is eight times the bit width of one symbol.

In some embodiments, the four sets of burst data (also referred to as read-back coded data here, which is essentially coded data read from the single storage channel) correspond to the coded data, so as to obtain corresponding correct data; however, the coded data may be interfered by environmental factors such as electromagnetism during transmission or in a storage unit, resulting in data errors. Therefore, the k read-back data symbols (i.e., data symbols read back from the single storage channel) and the m read-back check symbols (i.e., check symbols read back from the single storage channel) may differ from the k data symbols and the m check symbols included in the coded data.

In some embodiments, the storage unit may be the memory itself, for example, the DDR memory or the DDR RAM. In other embodiments, the storage unit may be a storage array in the memory.

S106: performing a decoding operation based on the group of error correction codewords, to obtain error corrected symbols.

The decoding operation here may refer to performing an ECC operation on the above-described group of error correction codewords, to obtain error corrected data symbols and/or error corrected check symbols.

Thus, in the method for processing data according to the at least one embodiment of the present disclosure, simultaneous error correction of, for example, two or more symbols may be implemented just by reading four sets of burst data from the single storage channel through one ECC operation. For example, without opening lockstep, the problem of a plurality of symbol half-chips simultaneously having errors may be effectively solved.

In some examples, errors of two or more symbols may occur in two or more storage devices, so error correction of two or more storage devices may be implemented.

Hereinafter, other aspects of the method for processing data according to the at least one embodiment of the present disclosure is described in detail.

For example, in the method for processing data according to the at least one embodiment of the present disclosure, organizing the four sets of burst data into the group of error correction codewords, includes: combining burst data corresponding to the same pin of the same storage device among the four sets of burst data read from the single storage channel into one of the k read-back data symbols or the m read-back check symbols, to obtain the k read-back data symbols and the m read-back check symbols; and connecting the k read-back data symbols and the m read-back check symbols to obtain the group of error correction codewords.

For example, the burst data corresponding to the same pin of the same data storage device among the four sets of burst data read from the single storage channel is combined into one of the k read-back data symbols, and the data corresponding to the same check storage device among the four sets of burst data read from the single storage channel is combined into one of the m read-back check symbols, to obtain the k read-back data symbols or the m read-back check symbols (collectively referred to as a plurality of symbols); and the plurality of symbols are connected into a group of error correction codewords (i.e., ECC words).

The inventor of the present disclosure is aware that bits of errors in a plurality of sets of data usually correspond to the pin of the same storage device, where one pin corresponds to one bit of one set of data. For example, when an error occurs on one pin of the storage device, all data corresponding to the pin in the plurality of sets of data usually has errors. Based on this, in the method for processing data according to the at least one embodiment of the present disclosure, in terms of a pin of a storage device, the data corresponding to the same pin of the same storage device among the four sets of burst data are combined into one symbol (i.e., a symbol of 4 bits), to obtain a plurality of symbols for the single storage channel; and the plurality of symbols are connected into a group of error correction codewords, i.e., the group of error correction codewords is formed for the single storage channel. Such organization mode of ECC words in terms of a pin of a storage device may reflect the error data for the same pin among the four sets of burst data into a single symbol, which may improve error correction capability.

Of course, the embodiments of the present disclosure are not limited thereto; the data corresponding to the same pin of the same storage device among the four sets of burst data may be combined into a symbol (i.e., a symbol of 8 bits or more bits) in units of two or more pins, to obtain a plurality of symbols for the single storage channel; and the plurality of symbols are organized (e.g., connected) into a group of error correction codewords.

For example, in the method for processing data according to the at least one embodiment of the present disclosure, the single storage channel corresponds to 8 data storage devices and 2 check storage devices. A bit width of each storage device among the 8 data storage devices and the 2 check storage devices is 4 bits.

Thus, the method for processing data according to the at least one embodiment of the present disclosure may be applied to a specific application scenario, for example, the single storage channel may be one of Ch0 or Ch1 used in DDR5 or other storage channel having the same structure, to implement error correction of a plurality of symbols of the corresponding memory.

Of course, the embodiments are not limited thereto; in other variations, the single storage channel may correspond to a first quantity of data storage devices and a second quantity of check storage devices; a bit width of each storage device among the data storage devices and the check storage devices may be the same or different; and the bit width may be 4 bits, 8 bits, or other bits.

For example, in the method for processing data according to the at least one embodiment of the present disclosure, combining the burst data corresponding to the same pin of the same storage device among the four sets of burst data read from the single storage channel into the group of error correction codewords, includes: performing the following operations for each storage device among the 8 data storage devices and the 2 check storage devices, to obtain data including 32 data symbols and 8 check symbols as the group of error correction codewords: organizing data corresponding to a first bit among the 4 bits in the four sets of burst data as a first symbol; organizing data corresponding to a second bit among the 4 bits in the four sets of burst data as a second symbol; organizing data corresponding to a third bit among the 4 bits in the four sets of burst data as a third symbol; and organizing data corresponding to a fourth bit among the 4 bits in the four sets of burst data as a fourth symbol.

Thus, in the method for processing data according to the at least one embodiment of the present disclosure, the ECC word organization in terms of a pin may be implemented for 8 x4 data storage devices and 2 x4 check storage devices.

Of course, the embodiments are not limited thereto. In other variations as described above, a group of error correction codewords may be combined similarly, as long as data corresponding to the same bit among a plurality of bits in the four sets of burst data are organized into a symbol.

For example, in the method for processing data according to the at least one embodiment of the present disclosure, the single storage channel is a single memory channel used in DDR5. For example, the single memory channel may be Ch0 or Ch1 used in DDR5.

Thus, the method for processing data according to the at least one embodiment of the present disclosure may be applied to DDR5.

For example, in the method for processing data according to the at least one embodiment of the present disclosure, a quasi-Vandermonde matrix or an RS code may be used in coding and decoding operations.

For example, for the technology of the quasi-Vandermonde matrix or the RS code, the application with publication No. CN112688693A, entitled "Memory Multi Matrix Coding Method, Error Correction Method and Related Apparatus", the application with publication No. CN116092567A, entitled "Data Processing Method, Processing Apparatus and Storage System", the application with publication No. CN116028260A, entitled "Data Processing Method, Processing Apparatus and Storage system", and the application with publication No. CN110071727A, entitled "Coding Method, Decoding Method, Error Correction Method and Apparatus", for example, may be referred to, the disclosure of which is incorporated herein by reference in its entirety as part of the present disclosure.

Hereinafter, one or more aspects of the quasi-Vandermonde matrix that may be used in the coding and decoding operations will be exemplarily described.

For example, in the method for processing data according to the at least one embodiment of the present disclosure, coding k data symbols written into the single storage channel, includes: coding the k data symbols based on a coding matrix; performing a decoding operation based on the group of error correction codewords, to obtain error corrected symbols, includes: decoding the group of error correction codewords based on a decoding matrix, to obtain adjoint data; and using the adjoint data to obtain the error corrected symbols, where the coding matrix is a matrix of at least k+m rows and k columns and includes a quasi-Vandermonde matrix, and the decoding matrix is a matrix of at least m rows and k+m columns and includes a quasi-Vandermonde matrix, where the quasi-Vandermonde matrix is a matrix associated with a Vandermonde matrix, where, $k \leq p^n - 1$, $m \leq p^n$, where n is the number of bits per symbol, and p is capacity of a single bit.

Thus, the method for processing data according to the at least one embodiment of the present disclosure may support more check symbols and data symbols based on the quasi-Vandermonde matrix than the RS code, which improves a code rate, enhance error correction capability, and is easy to expand. However, the embodiments are not limited thereto, and the above-described coding and decoding may also be implemented through other methods.

In some embodiments, in the method according to the at least one embodiment of the present disclosure, the coding matrix may include a first interval and a second interval, where the first interval may include an identity matrix of k rows and k columns, the second interval may include a quasi-Vandermonde matrix of m rows and k columns; and the coding the k data symbols based on a coding matrix, may include: multiplying the identity matrix of k rows and k columns by the k data symbols, to obtain the k data symbols; and multiplying the quasi-Vandermonde matrix of m rows and k columns by the k data symbols, to obtain the m check symbols.

Thus, in the method according to the at least one embodiment of the present disclosure, a variety of coding matrices may be formed, which improves flexibility of the formed coding matrices. It may be understood that the coding matrix may further additionally include other intervals; and 0, 1, or other suitable numerical values may be set in other intervals without affecting implementation of the above-described coding.

In some embodiments, in the method according to the at least one embodiment of the present disclosure, the decoding matrix may include a third interval and a fourth interval, where the third interval may include a quasi-Vandermonde matrix of m rows and k columns; the fourth interval may include an identity matrix of m rows and m columns; and decoding the read-back coded data based on the decoding matrix, to obtain the adjoint data, may include: multiplying the decoding matrix by the k read-back data symbols and the m read-back check symbols, to obtain the adjoint data.

Thus, in the method according to the at least one embodiment of the present disclosure, a variety of decoding matrices may be formed, which improves flexibility of the formed decoding matrices. It may be understood that the decoding matrix may further additionally include other intervals; and 0, 1, or other suitable numerical values may be set in other intervals without affecting implementation of the above-described decoding.

In some embodiments, in the method according to the at least one embodiment of the present disclosure, using the adjoint data to obtain the error corrected symbols, may include: reading the adjoint data; in response to the adjoint data all being 0, outputting the k read-back data symbols as the error corrected symbols, where the adjoint data all being 0 may indicate that the k read-back data symbols and the m read-back check symbols have no errors; in response to the adjoint data having one piece of 1, outputting k read-back data symbols as error corrected symbols, where the adjoint data having one piece of 1 may indicate that the k read-back data symbols have no errors and a read-back check symbol corresponding to the adjoint data having one piece of 1 among the m read-back check symbols has an error; in response to the adjoint data having v pieces of 1, using the adjoint data to correct error symbols among the k read-back data symbols and the m read-back check symbols, to obtain the error corrected symbols, where the adjoint data having v pieces of 1 may indicate that v1 read-back data symbols corresponding to the adjoint data having one piece of 1 among the k read-back data symbols have errors and v2 read-back check symbols corresponding to the adjoint data having one piece of 1 among the m read-back check symbols have errors, where $v \geq 2$, $v1 \leq m$, $v2 \leq m$, $v1+v2=v$.

Thus, in the method according to the at least one embodiment of the present disclosure, whether the read-back data symbols and the read-back check symbols have errors and positions of the errors may be determined based on the obtained adjoint data.

For example, in the method for processing data according to the at least one embodiment of the present disclosure, the quasi-Vandermonde matrix includes a Vandermonde matrix, a left-right flipped Vandermonde matrix, an up-down flipped Vandermonde matrix, or a transpose of the Vandermonde matrix.

For example, in the method for processing data according to the at least one embodiment of the present disclosure, the Vandermonde matrix may be used in the coding and decoding operations. An exemplary Vandermonde matrix may have a form below:

$$\begin{bmatrix} 1 & 1 & \cdots & 1 \\ 1 & 2 & \cdots & n \\ 1 & 4 & \cdots & n^2 \\ \vdots & \vdots & \vdots & \vdots \\ 1 & 2^{m-1} & \cdots & n^{m-1} \end{bmatrix}.$$

For example, in the method for processing data according to the at least one embodiment of the present disclosure, the number of rows and columns of the quasi-Vandermonde matrix may be adaptively adjusted according to the ECC words.

Corresponding to the method for processing data according to the at least one embodiment of the present disclosure, the present disclosure further provides a memory controller.

Fig. 2 shows a schematic diagram of a memory controller 200 according to at least one embodiment of the present disclosure. As shown in Fig. 2, the memory controller 200 includes a reading unit 210 and a decoding unit 220. The decoding unit may be a decoder or a portion of a decoder. It may be understood that the memory controller 200 may alternatively or additionally include other units, for example, a coding unit (or an encoder) for executing a coding operation. For example, the reading unit 210 may serve as a portion of a transceiver unit of the memory controller; and the decoding unit 220 may serve as a portion of a codec unit of the memory controller.

The reading unit 210 is configured to read four sets of burst data from a single storage channel; organize the four sets of burst data into a group of error correction codewords, where the group of error correction codewords includes k read-back data symbols and m read-back check symbols, and a total bit width of the m read-back check symbols is eight times the bit width of one symbol.

The decoding unit 220 is configured to perform a decoding operation based on the group of error correction codewords, to obtain error corrected symbols.

Thus, the memory controller according to the at least one embodiment of the present disclosure may implement simultaneous error correction of, for example, two or more symbols just by reading four sets of burst data from the single storage channel through one ECC operation. For example, without opening lockstep, the problem of a plurality of symbol half-chips simultaneously having errors may be effectively solved.

Hereinafter, other aspects of the memory controller according to the at least one embodiment of the present disclosure will be described in detail.

For example, in the memory controller according to the at least one embodiment of the present disclosure, the reading unit is further configured to: combine burst data corresponding to the same pin of the same storage device among the four sets of burst data read from the single storage channel into one of the k read-back data symbols or the m read-back check symbols, to obtain the k read-back data symbols and the m read-back check symbols; and connect the k read-back data symbols and the m read-back check symbols to obtain the group of error correction codewords.

For example, in the memory controller according to the at least one embodiment of the present disclosure, the single storage channel corresponds to 8 data storage devices and 2 check storage devices; a bit width of each storage device among the 8 data storage devices and the 2 check storage devices is 4 bits.

For example, in the memory controller according to the at least one embodiment of the present disclosure, the reading unit is further configured to: perform the following operations for each storage device among the 8 data storage devices and the 2 check storage devices, to obtain data including 32 data symbols and 8 check symbols as the group of error correction codewords: organizing data corresponding to a first bit among the 4 bits in the four sets of burst data as a first symbol; organizing data corresponding to a second bit among the 4 bits in the four sets of burst data as a second symbol; organizing data corresponding to a third bit among the 4 bits in the four sets of burst data as a third symbol; and organizing data corresponding to a fourth bit among the 4 bits in the four sets of burst data as a fourth symbol.

For example, in the memory controller according to the at least one embodiment of the present disclosure, the single storage channel is a single memory channel for DDR5.

Only a portion of the memory controller 200 according to the at least one embodiment of the present disclosure is described above in conjunction with Fig. 2; respective aspects of the method for processing data 100 described in conjunction with Fig. 1 according to the present disclosure may be referred to for the remaining portion of the memory controller 200; effects of the respective aspects of the method for processing data 100 described in conjunction with Fig. 1 according to the present disclosure may also be mapped to the memory controller 200 described in conjunction with Fig. 2 according to the present disclosure; and no details will be repeated here.

For example, the memory controller 200 according to the at least one embodiment of the present disclosure alternatively or additionally includes a coding unit to execute the above-described coding.

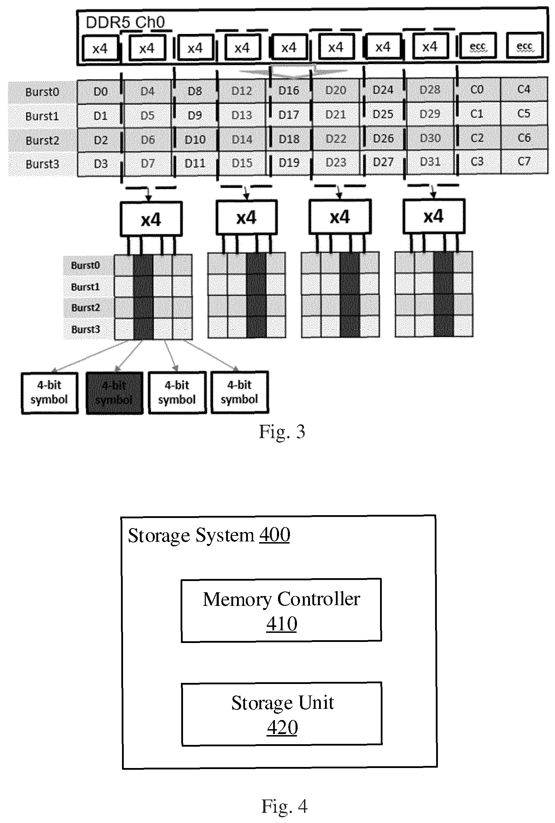

Hereinafter, an example application scenario that may utilize the method for processing data or the memory controller according to at least one embodiment of the present disclosure is described through Fig. 3. It may be understood that the application scenario shown in Fig. 3 is only exemplary and is not intended to illustrate the respective aspects of the method for processing data or the memory controller as described above in an exhaustively listing manner; the respective aspects described in conjunction with Fig. 3 and the respective aspects described in conjunction with Fig. 1 and Fig. 2 may be referred to each other without exceeding the scope of the present disclosure.

In the example application scenario, taking Ch0 used in DDR5 (shown as DDR5 Ch0) as the above-described single storage channel, when at any moment, a plurality of memory devices have errors with each memory device having 1 bit to 2 bits of error, the hardware structure according to the present disclosure may be used to correct errors of the plurality of memory devices simultaneously without software involvement or relying on historically recorded information, which greatly improves reliability of the memory and reduces risks of data loss and system downtime.

Fig. 3 shows a structural diagram of simultaneously correcting a plurality of memory device errors according to at least one embodiment of the present disclosure.

In the application scenario shown in Fig. 3, taking that one memory device has one bit of error as an example, one ECC operation may simultaneously correct errors of up to 4 memory devices. By using the method, technical effects below may be achieved:

- Errors of 4 memory devices may be corrected, where each memory device has 1 bit of error data; and an error bit is in an arbitrary position.
- Errors of 3 memory devices may be corrected, where two memory devices have 1 bit of error data and the other memory device has 2 bits of error data. An error memory device may be an arbitrary memory device, and an error bit is also in an arbitrary position;
- Errors of 2 memory devices may be corrected, where the two memory devices may each have 2 bits of error data; or it may also be a case where 1 memory device has 1 bit of error data while the other 1 memory device has 3 bits of error data. An error memory device may be an arbitrary memory device; and an error bit is also in an arbitrary position;
- An error of 1 memory device may be corrected, where the memory device has 4 bits of error. Then the memory supports x4chipkill. The error memory device may be an arbitrary memory device.

Hereinafter, one or more aspects of the application scenario shown in Fig. 3 will be introduced in detail.

Referring to Fig. 3, DDR5 Ch0 corresponds to 8 x4 data memory devices (shown as 8 memory devices as "x4" in Fig. 3) and 2 x4 check memory devices (shown as 2 memory devices as "ecc" in Fig. 3).

Four sets of burst data, namely, Burst0, Burst1, Burst2 and Burst3 are read or received from DDR5 Ch0. Burst0 includes data D0, D4, D8, D12, D16, D20, D24, D28 corresponding to 8 x4 data memory devices, as well as data C0 and C4 corresponding to two x4 check memory devices; Burst1 includes data D1, D5, D9, D13, D17, D21, D25, D29 corresponding to 8 x4 data memory devices, as well as data C1 and C5 corresponding to two x4 check memory devices; Burst2 includes data D2, D6, D10, D14, D18, D22, D26, D30 corresponding to 8 x4 data memory devices, as well as data C2 and C6 corresponding to two x4 check memory devices; and Burst3 includes data D3, D7, D11, D15, D19, D23, D27, D31 corresponding to 8 x4 data memory devices, as well as data C3 and C7 corresponding to two x4 check memory devices.

Exemplarily, D0 to D31 and C0 to C7 among the four sets of burst data may be generated by coding the data corresponding to D0 to D31. In a case of no errors, D0 to D31 are consistent with the corresponding data, while in a case of errors, D0 to D31 are inconsistent with the corresponding data.

In the example application scenario of Fig. 3, taking x4-bit memory devices as an example, a plurality of bits of error are corrected without opening the lockstep function. When writing data, one set of data is only written into four sets of burst data of one memory channel. For example, in DDR5 Ch0 shown in Fig. 3, one set of data written corresponds to or is embodied in Burst0/1/2/3. The four sets of burst data Burst0/1/2/3 read, with a total of 160 bits, compose a group of ECC words.

The composing a group of ECC words is implemented by organizing the data corresponding to the same pin (embodied as the same bit of the same storage device) of the same storage device of the memory devices (the data memory devices and the check memory devices) among the four sets of burst data into one symbol.

For example, the 4 4×4 boxes shown in the middle portion of Fig. 3 exemplarily show detailed schematic diagrams of data structures of the four sets of burst data of the 4 x4-bit memory devices (i.e., the 4 dashed boxes in the upper portion of Fig. 3) respectively. Each row in a 4x4 box corresponds to one of the four sets of burst data of a corresponding x4-bit memory device, and each column in a 4x4 box corresponds to one of 4 bits of a corresponding x4-bit memory device.

The bottom portion of Fig. 3 shows 4 4-bit symbols, where each symbol is composed of data corresponding to the same bit among four sets of burst data of a corresponding x4-bit memory device.

Therefore, with respect to the memory device corresponding to DDR5 Ch0, an exemplary ECC word composition structure is as follows:

Symbol 1 is a symbol composed of the highest bit3 data of D0/D1/D2/D3 corresponding to the four sets of data Burst0/1/2/3 of the first x4 data memory device;
Symbol 2 is a symbol composed of the bit2 data of D0/D1/D2/D3 corresponding to the four sets of data Burst 0/1/2/3 of the first x4 data memory device;
Symbol 3 is a symbol composed of the bit1 data of D0/D1/D2/D3 corresponding to the four sets of data Burst0/1/2/3 of the first x4 data memory device;
Symbol 4 is a symbol composed of the bit0 data of D0/D1/D2/D3 corresponding to the four sets of data Burst0/1/2/3 of the first x4 data memory device;

...

The DDR5 data has a bit width of 40 bits (8 data memory devices+2 check memory devices); a position of each bit of data (i.e., bit) corresponds to four sets of data, i.e., Burst0/1/2/3; and each position has a total of 4 bits of data, composing one symbol. In this way, 32 data symbols and 8 check symbols are composed.

After the ECC is organized, one ECC operation may be implemented by using, for example, the above-described algorithms based on the Vandermonde matrix, which may simultaneously correct a scenario where 4 symbols have errors, without replacing device chips like DDDC or opening lockstep. This improves error correction capability and probability, without having a negative impact on performance of DDR, and without software involvement.

In the above-described example application scenario, a plurality of memory devices simultaneously having errors may be corrected, and the problem of a plurality of chips having errors and reporting UE may be effectively solved, so as to improve reliability and robustness of the memory and reduce risks of data loss and downtime. For example, with continued reference to Fig. 3, in the application scenario of Fig. 3, a case where 4 memory devices have errors is exemplarily shown, where data errors in the memory devices shown in the 4 dashed boxes in the upper portion of Fig. 3 are respectively located in the second bit, the third bit, the third bit and the third bit among the 4 bits in the corresponding data memory devices shown in the middle portion of Fig. 3 (i.e., the error bits are shown in dark gray), so there are 4 error symbols among the 32 data symbols+8 check symbols organized. Further, one ECC operation may be implemented through, for example, the algorithm based on the Vandermonde matrix, which may simultaneously correct 4 symbol errors and implement error correction for 4 data memory devices. Of course, the embodiments are not limited thereto, and errors may also be located in the check memory device, or may also be located in both the data memory device and the check memory device; or errors may also be located in other bits; or errors may also be located in a single memory device, two memory devices, three memory devices, etc., so as to implement error correction for a corresponding quantity of memory devices. The above-described example application scenario is only implementation of a portion or additional aspects of the method for processing data and the memory controller according to at least one embodiment of the present disclosure; the method for processing data and the memory controller according to at least one embodiment of the present disclosure and additional aspects thereof may be referred to for other aspects of the above-described example application scenario.

Fig. 4 shows a schematic diagram of a storage system 400 according to at least one embodiment of the present disclosure. As shown in Fig. 4, the storage system 400 includes a memory controller 410 and a storage unit 420.

The memory controller 410 may be the memory controller described with reference to Fig. 2. The storage unit 420 may be any memory that implements data storage. In some embodiments, the storage unit 420 may be the memory *per se,* for example, a DDR memory or a DDR RAM. In other embodiments, the storage unit may be a storage array in the memory.

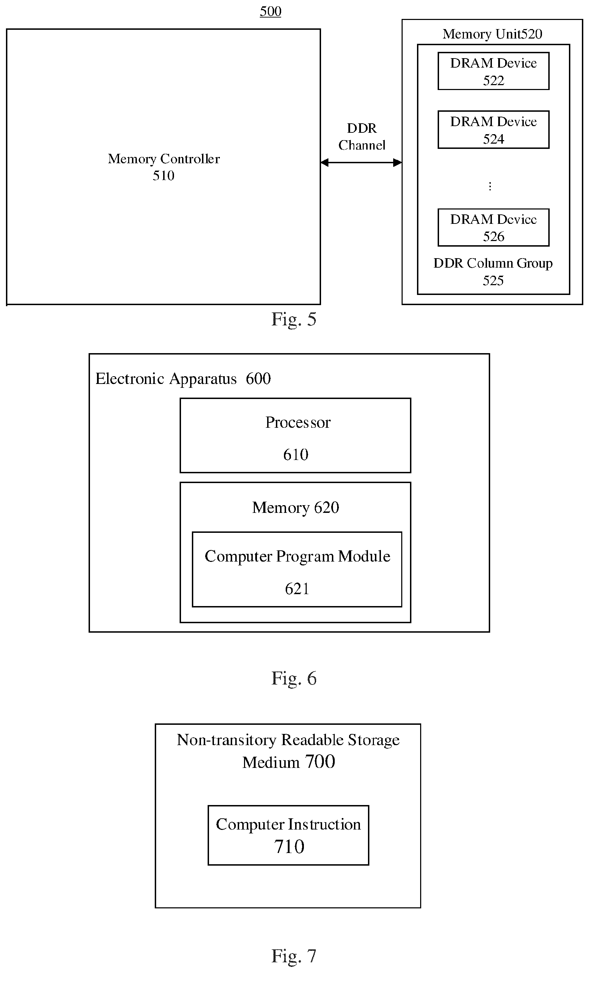

Fig. 5 shows a schematic diagram of a memory subsystem 500 according to at least one embodiment of the present disclosure. The memory subsystem 500 here may be an exemplary instance of the above storage system 400.

Referring to Fig. 5, the memory subsystem 500 may include a memory controller 510 and a memory unit 520. The memory controller 510 may be an exemplary instance of the above memory controller; and the memory unit 520 may be an exemplary instance of the above storage unit, for example, the memory unit may be a DDR, for example, the above DDR5. The memory controller 510 is also usually referred to as a main control chip.

The memory unit 520 may include a DDR column group 525. The DDR column group 525 may be an exemplary instance of a DDR5 column group corresponding to the above DDR5 Ch0. The DDR column group 525 may include a plurality of DRAM devices, for example, a DRAM device 522, a DRAM device 524, and a DRAM device 526, etc.; these DRAM devices may be an exemplary instance of the data storage devices and check storage devices or data memory devices and check memory devices above. In addition, the DRAM device may include an encoder, a decoder, etc. to execute corresponding coding operations and ECC operations when performing read and write operations on the DRAM device. The memory unit 520 may be a dual in-line memory module (DIMM), a plurality of DRAM devices directly soldered onto a circuit board (also referred to as DRAM device chips), or in other forms.

With continued reference to Fig. 5, the memory controller 510 may interact with the memory unit 520 via a DDR channel. Although Fig. 5 takes one DDR channel as an example, the embodiments are not limited thereto, and the memory subsystem 500 may further include a plurality of DDR channels. In addition, the memory unit 520 may include a plurality of DDR column groups, and at least one embodiment of the present disclosure is not limited thereto.

Fig. 6 shows a schematic diagram of an electronic apparatus 600 according to at least one embodiment of the present disclosure.

As shown in Fig. 6, the electronic apparatus 600 includes a processor 610 and a memory 620. The memory 620 includes one or more computer program modules 621. The one or more computer program modules 621 are stored in the memory 620 and are configured to be executed by the processor 610; the one or more computer program modules 621 include instructions for executing the method for processing data according to the at least one embodiment of the present disclosure; and the instructions, when executed by the processor 610, may execute one or more steps of the method for processing data according to the at least one embodiment of the present disclosure and additional aspects thereof. The memory 620 and the processor 610 may be interconnected through a bus system and/or other forms of connection mechanisms (not shown). For example, the bus may be a peripheral component interconnect (PCI) bus or an extended industry standard architecture (EISA) bus, etc. The communication bus may be divided into an address bus, a data bus, a control bus, etc.

Exemplarily, the processor 610 may be a central processing unit (CPU), a digital signal processor (DSP), or other form of processing unit having a data processing capability and/or an instruction execution capability, for example, a field programmable gate array (FPGA), etc.; for example, the central processing unit (CPU) may be X86 or ARM architecture, RISC-V architecture, etc. The processor 610 may be a general-purpose processor or a special-purpose processor, and may control other components in the electronic apparatus 600 to execute desired functions.

Exemplarily, the memory 620 may include any combination of one or more computer program products; and the computer program products may include various forms of computer-readable storage media, for example, a volatile memory and/or a non-volatile memory. The volatile memory may include, for example, a random access memory (RAM) and/or a cache, or the like. The non-volatile memory may include, for example, a read only memory (ROM), a hard disk, an erasable programmable read only memory (EPROM), a portable compact disk read only memory (CD-ROM), a USB memory, a flash memory, or the like. One or more computer program modules may be stored on the computer-readable storage medium, and the processor 610 may run the one or more computer program modules 621, to implement various functions of the electronic apparatus 600. Various applications and various data, as well as various data used and/or generated by the applications may also be stored on the computer-readable storage medium.

For example, the electronic apparatus 600 may further include: an input apparatus including, for example, a touch screen, a touch pad, a keyboard, a mouse, a camera, a microphone, an accelerometer, a gyroscope, etc.; an output apparatus including, for example, a liquid crystal display, a speaker, a vibrator, etc.; an storage apparatus including, for example, a magnetic tape or a hard disk (HDD or SDD), etc.; and a communication apparatus including, for example, a LAN card, a modem, and other network interface card. The communication apparatus may allow the electronic apparatus 600 to perform wireless or wired communication with other device so as to exchange data, and execute communication processing via networks such as the Internet. A removable storage medium, such as a magnetic disk, an optical disk, a magneto-optical disk, a semiconductor memory, etc. are installed on the driver as required, so that computer programs read therefrom may be installed into a storage apparatus as required.

For example, the electronic apparatus 600 may further include a peripheral interface (not shown), etc. The peripheral interface may be interfaces of various types, for example, a USB interface, a lighting interface, etc. The communication apparatus may communicate with a network and other devices through wireless communication; the network is, for example, the Internet, an intranet and/or a wireless network such as a cellular telephone network, a wireless local area network (LAN) and/or a metropolitan area network (MAN). Wireless communication may adopt any one of a variety of communication standards, protocols and technologies, including but not limited to global system for mobile communication (GSM), enhanced data GSM environment (EDGE), wideband code division multiple access (W-CDMA), code division multiple access (CDMA), time division multiple access (TDMA), Bluetooth, Wi-Fi (e.g., based on IEEE 802. 11a, IEEE 802. 11b, IEEE 802. 11g and/or IEEE 802. 11n standards), voice over Internet protocol (VoIP), Wi-MAX, protocols for e-mail, instant messaging and/or short message service (SMS), or any other suitable communication protocol.

The electronic apparatus 600 may be, for example, a system on chip (SOC) or a device including the SOC, for example, may be a mobile phone, a tablet personal computer, a laptop, an e-book, a game console, a television, a digital photo frame, a navigator, a household appliance, a communication base station, an industrial controller, a server, or any combination of data processing apparatuses and hardware, which will not be limited in the embodiments of the present disclosure. The description of the method for processing data according to the at least one embodiment of the present disclosure and the additional aspects thereof above may be referred to for specific functions and technical effects of the electronic apparatus 600, and no details will be repeated here.

Fig. 7 shows a schematic diagram of a non-transitory readable storage medium 700 according to at least one embodiment of the present disclosure.

As shown in Fig. 7, the non-transitory readable storage medium 700 stores computer instructions 710, the computer instructions 710, when executed by a processor, execute one or more steps of the method for processing data and the additional aspects thereof as described above.

Exemplarily, the non-transitory readable storage medium 700 may be any combination of one or more computer-readable storage media; for example, one computer-readable storage medium contains program codes for reading four sets of burst data from a single storage channel, program codes for organizing the four sets of burst data into a group of error correction codewords, and program codes for decoding based on the group of error correction codewords, to obtain the error corrected symbols.

Exemplarily, when the program codes are read by a computer, the computer may execute the program codes stored in the computer storage medium, for example, execute one or more steps of the method for processing data according to the at least one embodiment of the present disclosure and the additional aspects thereof.

Exemplarily, the non-transitory readable storage medium may include a memory card of a smart phone, a storage component of a tablet personal computer, a hard disk of a personal computer, a random access memory (RAM), a read-only memory (ROM), an erasable programmable read-only memory (EPROM), a portable compact disc read-only memory (CD-ROM), a flash memory, and other non-transitory readable storage medium or any combination thereof.

In the detailed description above, specific details have been elaborated for the purpose of explanation rather than limitation, in order to provide a thorough understanding of the respective aspects and embodiments described in the present disclosure. In some cases, detailed descriptions of well-known devices, components, circuits, and methods are omitted to avoid blurring the description of embodiments disclosed herein with unnecessary details. All statements and specific examples of the principles, aspects, and embodiments disclosed herein are intended to cover both structural equivalents and functional equivalents thereof. In addition, such equivalents are intended to include both currently known equivalents and future developed equivalents, that is, any component developed to execute the same function, regardless of a structure thereof. Therefore, for example, it may be understood that the block diagram here may represent a conceptual diagram of an illustrative circuit system or other functional unit that embodies the principles of the described embodiments. Such functions and the functional blocks shown will be understood as hardware implemented and/or computer implemented.

Embodiments in the specification are described in a progressive manner. For same or similar parts between embodiments, reference may be made to each other. Each embodiment focuses on a difference from other embodiments.

It should be noted that, in the present disclosure, the relational terms such as "first", "second", and the like, are only used to distinguish one entity or operation from another entity or operation, and are not intended to require or imply the existence of any actual relationship or order between these entities or operations. Furthermore, the terms "comprise/comprising", "include/including", or any other variations thereof are intended to cover a non-exclusive inclusion such that a process, method, article, or device that includes a list of elements includes not only those elements, but also other elements not expressly listed, or elements inherent to the process, method, article, or device. Without further limitation, an element qualified by the statement "comprises/includes..." does not exclude the presence of additional identical elements in the process, method, article, or device that includes the element.

The foregoing are only preferred embodiments of the present disclosure and are not intended to limit the present disclosure; the scope of the present disclosure is defined by the claims.

**Claims**

1. A method for processing data, comprising:

   reading four sets of burst data from a single storage channel;
   organizing the four sets of burst data into a group of error correction codewords, wherein the group of error correction codewords comprises k read-back data symbols and m read-back check symbols, and a total bit width of the m read-back check symbols is eight times a bit width of one symbol; and
   performing a decoding operation based on the group of error correction codewords, to obtain error corrected symbols.

2. The method according to claim 1, wherein the organizing the four sets of burst data into a group of error correction codewords, comprises:

   combining burst data corresponding to a same pin of a same storage device among the four sets of burst data read from the single storage channel into one of the k read-back data symbols or the m read-back check symbols, to obtain the k read-back data symbols and the m read-back check symbols; and
   connecting the k read-back data symbols and the m read-back check symbols to obtain the group of error correction codewords.

3. The method according to claim 2, wherein the single storage channel corresponds to 8 data storage devices and 2 check storage devices; and a bit width of each storage device among the 8 data storage devices and the 2 check storage devices is 4 bits.

4. The method according to claim 3, wherein combining the burst data corresponding to the same pin of the same storage device among the four sets of burst data read from the single storage channel into the group of error correction codewords, comprises:
   performing following operations for each storage device among the 8 data storage devices and the 2 check storage devices, to obtain data comprising 32 data symbols and 8 check symbols as the group of error correction codewords:

   organizing data corresponding to a first bit among the 4 bits in the four sets of burst data as a first symbol;
   organizing data corresponding to a second bit among the 4 bits in the four sets of burst data as a second symbol;
   organizing data corresponding to a third bit among the 4 bits in the four sets of burst data as a third symbol; and
   organizing data corresponding to a fourth bit among the 4 bits in the four sets of burst data as a fourth symbol.

5. The method according to claim 3, wherein the single storage channel is a single memory channel used in DDR5.

6. The method according to any one of claims 1 to 5, wherein coding k data symbols written into the single storage channel, comprises:

   coding the k data symbols based on a coding matrix;
   wherein the performing a decoding operation based on the group of error correction codewords, to obtain error corrected symbols, comprises:

   decoding the group of error correction codewords based on a decoding matrix, to obtain adjoint data; and
   using the adjoint data to obtain the error corrected symbols,
   wherein the coding matrix is a matrix of at least k+m rows and k columns and comprises a quasi-Vandermonde matrix; the decoding matrix is a matrix of at least m rows and k+m columns and comprises the quasi-Vandermonde matrix; and the quasi-Vandermonde matrix is a matrix associated with a Vandermonde matrix, where, $k \leq p^n-1$, $m \leq p^n$, where n is a number of bits per symbol, and p is capacity of a single bit.

7. The method according to claim 6, wherein the coding matrix comprises a first interval and a second interval; the first interval comprises an identity matrix of k rows and k columns, the second interval comprises a quasi-Vandermonde matrix of m rows and k columns; and
   the coding the k data symbols based on a coding matrix, comprises:

   multiplying the identity matrix of k rows and k columns by the k data symbols, to obtain the k data symbols; and

multiplying the quasi-Vandermonde matrix of m rows and k columns by the k data symbols, to obtain the m check symbols.

8. The method according to claim 6, wherein the decoding matrix comprises a third interval and a fourth interval; the third interval comprises a quasi-Vandermonde matrix of m rows and k columns; the fourth interval comprises an identity matrix of m rows and m columns; and

the decoding the group of error correction codewords based on a decoding matrix, to obtain adjoint data, comprises:

multiplying the decoding matrix by the k read-back data symbols and the m read-back check symbols, to obtain the adjoint data.

9. The method according to claim 6, wherein the using the adjoint data to obtain the error corrected symbols, comprises:

reading the adjoint data;

in response to the adjoint data all being 0, outputting the k read-back data symbols as the error corrected symbols, wherein the adjoint data all being 0 indicates that the k read-back data symbols and the m read-back check symbols have no errors;

in response to the adjoint data having one piece of 1, outputting the k read-back data symbols as the error corrected symbols, wherein the adjoint data having one piece of 1 indicates that the k read-back data symbols have no errors and a read-back check symbol corresponding to the adjoint data having one piece of 1 among the m read-back check symbols has an error;

in response to the adjoint data having v pieces of 1, using the adjoint data to correct error symbols among the k read-back data symbols and the m read-back check symbols, to obtain the error corrected symbols, wherein the adjoint data having v pieces of 1 indicates that v1 read-back data symbols corresponding to the adjoint data having one piece of 1 among the k read-back data symbols have errors and v2 read-back check symbols corresponding to the adjoint data having one piece of 1 among the m read-back check symbols have errors, where $v \geq 2$, $v1 \leq m$, $v2 \leq m$, $v1+v2=v$.

10. The method according to claim 6, wherein the quasi-Vandermonde matrix comprises a Vandermonde matrix, a left-right flipped Vandermonde matrix, an up-down flipped Vandermonde matrix, or a transpose of the Vandermonde matrix.

11. A memory controller, comprising:

a reading unit, configured to:

read four sets of burst data from a single storage channel; and

organize the four sets of burst data into a group of error correction codewords, wherein the group of error correction codewords comprises k read-back data symbols and m read-back check symbols, and a total bit width of the m read-back check symbols is eight times a bit width of one symbol; and

a decoding unit, configured to:

perform a decoding operation based on the group of error correction codewords, to obtain error corrected symbols.

12. The memory controller according to claim 11, wherein the reading unit is further configured to:

combine burst data corresponding to a same pin of a same storage device among the four sets of burst data read from the single storage channel into one of the k read-back data symbols or the m read-back check symbols, to obtain the k read-back data symbols and the m read-back check symbols; and

connect the k read-back data symbols and the m read-back check symbols to obtain the group of error correction codewords.

13. The memory controller according to claim 12, wherein the single storage channel corresponds to 8 data storage devices and 2 check storage devices; and a bit width of each storage device among the 8 data storage devices and the 2 check storage devices is 4 bits.

14. The memory controller according to claim 13, wherein the reading unit is further configured to:

perform following operations for each storage device among the 8 data storage devices and the 2 check storage devices, to obtain data comprising 32 data symbols and 8 check symbols as the group of error correction codewords:

organizing data corresponding to a first bit among the 4 bits in the four sets of burst data as a first symbol;

organizing data corresponding to a second bit among the 4 bits in the four sets of burst data as a second symbol;

organizing data corresponding to a third bit among the 4 bits in the four sets of burst data as a third symbol; and

organizing data corresponding to a fourth bit among the 4 bits in the four sets of burst data as a fourth symbol.

**15.** The memory controller according to claim 13, wherein the single storage channel is a single memory channel used in DDR5.

**16.** A storage system, comprising:

the memory controller according to claim 12; and
a storage unit.

**17.** An electronic apparatus, comprising:

one or more processors;
a memory, comprising one or more computer program modules;
wherein the one or more computer program modules are stored in the memory and configured to be executed by the one or more processors to implement the method according to any one of claims 1 to 10.

**18.** A non-transitory readable storage medium, storing computer executable instructions,
wherein the computer executable instructions, upon being executed by a processor, implement the method according to any one of claims 1 to 10.

100

S102

Read four pieces of burst data from a single
memory channel

S104

Organize the four pieces of burst data into a
group of error correcting code words

S106

On the basis of the group of error correcting
code words, perform a decoding operation so
as to obtain symbols of which errors have
been corrected

Fig. 1

Memory Controller 200

Reading Unit
210

Decoding Unit
220

Fig. 2

Fig. 3

Storage System 400

Memory Controller 410

Storage Unit 420

Fig. 4

500

| Memory Controller 510 | DDR Channel | Memory Unit520 |

DRAM Device 522

DRAM Device 524

⋮

DRAM Device 526

DDR Column Group 525

Fig. 5

Electronic Apparatus 600

Processor 610

Memory 620

Computer Program Module 621

Fig. 6

Non-transitory Readable Storage Medium 700

Computer Instruction 710

Fig. 7

# EP 4 600 827 A1

## INTERNATIONAL SEARCH REPORT

| International application No. |
| --- |
| **PCT/CN2024/097075** |

| A. | CLASSIFICATION OF SUBJECT MATTER |
| --- | --- |

G06F 11/10(2006.01)i

According to International Patent Classification (IPC) or to both national classification and IPC

| B. | FIELDS SEARCHED |
| --- | --- |

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, IEEE, ISI, CNKI: 存储, 通道, 突发, 纠错, 码字, 读回, 码元, 校验, 位宽, 解码, store, channel, burst, error s correction, codeword, read back, symbol, checksum, bit width, decode

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117539675 A (HYGON INFORMATION TECHNOLOGY CO., LTD.) 09 February 2024 (2024-02-09)<br>claims 1-18 | 1-18 |
| X | CN 116028260 A (HYGON INFORMATION TECHNOLOGY CO., LTD.) 28 April 2023 (2023-04-28)<br>description, paragraphs [0118]-[0206], and claims 15-17 | 1-18 |
| A | CN 116054842 A (CHENGDU HAIGUANG INTEGRATED CIRCUIT DESIGN CO., LTD.) 02 May 2023 (2023-05-02)<br>entire document | 1-18 |
| A | CN 116092567 A (HYGON INFORMATION TECHNOLOGY CO., LTD.) 09 May 2023 (2023-05-09)<br>entire document | 1-18 |
| A | US 2009031196 A1 (PRINCETON TECHNOLOGY CORP.) 29 January 2009 (2009-01-29)<br>entire document | 1-18 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 July 2024** | **24 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/097075**

| Patent document cited in search report | | | Publication date (day/month/year) | Patent family member(s) | | | Publication date (day/month/year) |
|---|---|---|---|---|---|---|---|
| CN | 117539675 | A | 09 February 2024 | None | | | |
| CN | 116028260 | A | 28 April 2023 | None | | | |
| CN | 116054842 | A | 02 May 2023 | None | | | |
| CN | 116092567 | A | 09 May 2023 | None | | | |
| US | 2009031196 | A1 | 29 January 2009 | TW | 200906072 | A | 01 February 2009 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311247611
- CN 112688693 A
- CN 116092567 A
- CN 116028260 A
- CN 110071727 A